(19) Europäisches Patentamt European Patent Office Office européen des brevets

(11) **EP 2 928 111 B1**

(12) **EUROPEAN PATENT SPECIFICATION**

(45) Date of publication and mention of the grant of the patent:
**06.05.2020 Bulletin 2020/19**

(51) Int Cl.:
***H04L 9/00*** *(2006.01)*

(21) Application number: **15160507.8**

(22) Date of filing: **24.03.2015**

(54) **METHOD FOR PERFORMING AN ENCRYPTION WITH LOOK-UP TABLES, AND CORRESPONDING ENCRYPTION APPARATUS AND COMPUTER PROGRAM PRODUCT**

VERFAHREN ZUR DURCHFÜHRUNG EINER VERSCHLÜSSELUNG MIT NACHSCHLAGETABELLEN UND ENTSPRECHENDE VERSCHLÜSSELUNGSVORRICHTUNG UND COMPUTERPROGRAMMPRODUKT

PROCÉDÉ POUR LA RÉALISATION D'UN CRYPTAGE AVEC DES TABLES DE CONSULTATION ET APPAREIL DE CRYPTAGE CORRESPONDANT ET PRODUIT DE PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2014 IT TO20140268**

(43) Date of publication of application:
**07.10.2015 Bulletin 2015/41**

(73) Proprietor: **STMicroelectronics S.r.l.**
**20864 Agrate Brianza (MB) (IT)**

(72) Inventor: **Melzani, Filippo**
**I-20875 Burago di Molgora (Monza Brianza) (IT)**

(74) Representative: **Crovini, Giorgio**
**Buzzi, Notaro & Antonielli d'Oulx S.p.A.**
**Corso Vittorio Emanuele II, 6**
**10123 Torino (IT)**

(56) References cited:
**US-A1- 2005 232 430      US-A1- 2010 322 412**
**US-A1- 2011 055 591**

- **KAI SCHRAMM ET AL: "Higher Order Masking of the AES", 1 January 2005 (2005-01-01), TOPICS IN CRYPTOLOGY - CT-RSA 2006 : THE CRYPTOGRAPHERS' TRACK AT THE RSA CONFERENCE 2006, SAN JOSE, CA, USA, FEBRUARY 13-17, 2006 ; PROCEEDINGS; [LECTURE NOTES IN COMPUTER SCIENCE], SPRINGER, BERLIN, DE, PAGE(S) 208 - 225, XP019026783, ISBN: 978-3-540-31033-4**

**Description**

Technical field

The present description relates to techniques for implementing an encryption method that envisages use of a look-up table for performing one or more operations of an encryption procedure, this operation of using a look-up table comprising an operation of initialization of the look-up table and comprising masking with an input mask the data at input to the look-up table and with an output mask the data at output from the look-up table.

Various embodiments may be applied to encryption of data contained in smartcards or set-top boxes.

Technological background

Look-up tables (LUTs), also referred to as "association tables", are data structures that enable association to any admissible combination of input data of a corresponding (not necessarily unique) configuration of output data. Normally, the use of a look-up table makes it possible to speed up operations, in so far as access to the datum in the table is faster than calculation of the datum itself.

Look-up tables are hence frequently used in encryption algorithms, whether hardware or software, to carry out complex calculations. For example, a look-up table, the so-called "Substitution Box" or "S-Box", is used in the known AES (Advanced Encryption Standard) encryption algorithm for implementing operations such as, for example, the Sub-Bytes operation.

In order to discover the key, in particular of symmetric-key block-encryption algorithms, but even algorithms with non-symmetric public key, such as the AES algorithm, it is known to use the so-called "side-channel attacks", i.e., attacks that exploit the information that can be derived, through a so-called "leakage" process, i.e., a process of leakage of information, from physical implementation of the encryption procedure, for example by measuring the energy absorption of the circuit.

Several of the countermeasures against the above side-channel attacks exploit the presence of look-up tables in the circuits that implement the algorithms, performing operations of initialization of the values contained in these tables.

The way in which the LUT is initialized is critical for effective protection against side-channel attacks, and it is difficult to obtain a protection from high-order attacks. In general, a side-channel attack is defined as v-variate if it combines a number v of time instances, for example clock cycles, of the controlled physical manifestation, and is said to be of the d-th order if it requires statistical momenta of order d to be considered for distinguishing the correct hypotheses from the erroneous ones.

It is known, for example, to use as countermeasure against side-channel attacks operations of linear, Boolean, masking of the data. According to this technique, each datum is masked via a Boolean XOR operation with mask values. It is convenient to incorporate also the mask values in the look-up table.

It is known in general to initialize a look-up table where there are input data *din,* i.e., the data that indicate the address or location of the values to be retrieved in the table, via a first input mask $R_1$ and to mask output data *dout,* i.e., the values retrieved at the address or location specified by the input data *din,* via a first output mask $R_2$. This is done by storing in the location of the look-up table corresponding to the address given by $din \oplus R_1$, i.e., by the XOR operation between the input data *din* and the first input mask $R_1$ a value given by $dout \oplus R_2$, i.e., by the XOR operation between the output data *dout* and the first output mask $R_2$. This is usually done one at a time for all the possible values of the input data *din* and performing the operation of storage in the look-up table of the corresponding output data.

The so-called "high order" side-channel attacks attack different points of the algorithm that use the same mask values so that the protection of the aforesaid mask can be removed. In general, given a mask, initialization of the look-up table with this mask and access to the masked data during computation means having at least two different operations in two different cycles that use one and the same mask, the corresponding attack thus qualifying as second-order attack.

In the above context, the countermeasures against high-order attacks are usually complex and are very penalizing in terms of latency time and circuit area required for their implementation. Moreover, in hardware implementations, the level of protection must be defined at the moment of design, because this affects the design itself and, as has been said, the area of the circuit to be designed. This constitutes a further complexity and drawback.

The foregoing is encountered in particular in AES encryption apparatuses, which, as has been said, implement S-Box devices in order to carry out operations, such as, for example, the SubBytes operation, that comprise at least one look-up table, in particular for carrying out the inversion required by the SubBytes operation.

The look-up table that implements the S-Box has a considerable size, and this determines a high latency, which limits the performance against side-channel attacks.

Object and summary

The object of the embodiments described herein is to improve the potential of the methods according to the known art as set forth previously. The scope of the invention is defined by the appended claims.

Various embodiments achieve the above object thanks to a device having the characteristics specified in the ensuing claims. Various embodiments may refer also to an encryption method as likewise to a computer program product that can be loaded into the memory of at least one computer (e.g., a terminal in a network) and comprises portions of software code suitable for carrying out the steps of the method when the program is run on at least one computer. As used herein, the aforesaid computer program product is understood as being equivalent to a computer-readable medium containing instructions for control of the computer system so as to co-ordinate execution of the method according to the invention. Reference to "at least one computer" is meant to highlight the possibility of the present invention being implemented in a modular and/or distributed form. The claims form an integral part of the technical teachings provided herein in relation to the invention.

Various embodiments may provide a reasonable synthesis between safety from attacks and computational speed, in particular by varying the number of iterations of the initialization steps envisaged by the invention or by varying the number of masks used for initialization. Various embodiments may envisage use in S-Boxes for AES encryption. Various embodiments may envisage that this S-Box for AES encryption uses a structure of look-up tables with tower-of-fields architecture implemented via flip-flops, to enable a fast execution, in particular in a single clock cycle, of the steps of initialization of the method according to the invention.

K. Schramm, C. Paar: "Higher Order Masking of the AES", Topics in Cryptology, CT-RSA 2006 pageS 208 - 225, ISBN: 978-3-540-31033-4, discloses masking and unmasking the S-Boxes in the AES cryptosystem using a cascade of a plurality of masks.

The U.S. Patent Application Publication document US 2011/055591 A1 to Rivain et al. discloses a method for data encryption using conversion tables and multiple masking stages.

Brief description of the drawings

Various embodiments will now be described, purely by way of example, with reference to the annexed figures, wherein:

- Figures 1a and 1b show blocks diagrams illustrating the method according to the invention;
- Figures 2a and 2b show blocks diagrams illustrating application of the method according to the invention to AES encryption;
- Figure 3 shows a block diagram illustrating details corresponding to the application of Figure 2b;
- Figure 4 shows a known block diagram of an S-Box device;
- Figure 5 shows a look-up table used in the device of Figure 4;
- Figure 6 shows a block diagram illustrating details of the device of Figure 5;
- Figure 7 shows a block diagram of a device according to the invention;
- Figure 8 shows a block diagram illustrating details of the device of Figure 7;
- Figure 9a shows a circuit implementation of an element of the device according to the known art; and
- Figure 9b shows a circuit implementation of an element of the device according to the invention.

Detailed description

In the ensuing description, numerous specific details are provided in order to facilitate as much as possible understanding of the embodiments provided by way of example. The embodiments may be implemented with or without specific details, or else with other methods, components, materials, etc. In other cases, structures, materials, or operations that are well known are not shown or described in detail so that aspects of the embodiments will not be obscured. Reference in the framework of the present description to "an embodiment" or "one embodiment" means that a given peculiarity, structure, or characteristic described in connection with the embodiment is comprised in at least one embodiment. Hence, recurrence of phrases such as "in an embodiment" or "in one embodiment" in various points of the present description does not necessarily refer to one and the same embodiment. Moreover, the peculiarities, structures, or characteristics may be combined in any convenient way in one or more embodiments.

The notations and references are here provided only for convenience of the reader and do not define the scope or the meaning of the embodiments.

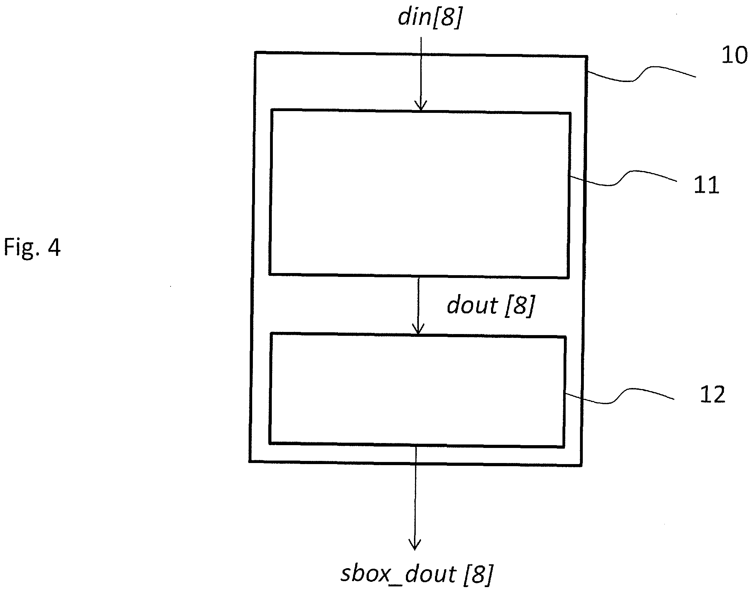

The solution according to the invention envisages in general carrying out an operation of initialization of the look-up table by masking via a first input mask the data at input to the look-up table and with a first output mask the data at output from the look-up table. It is then envisaged to re-initialize the look-up table via the steps of providing a second input mask and a second output mask, and computing the values of re-initialization of the look-up table as a function of a logic combination of the values of the first and second input masks and of a logic combination of the values of the first and second output masks. As has been said, the above initialization operations are preferably carried out on one or more of the composite look-up tables of the S-Box device according to the invention, which will be described in greater detail in what follows with reference to Figures 4-9.

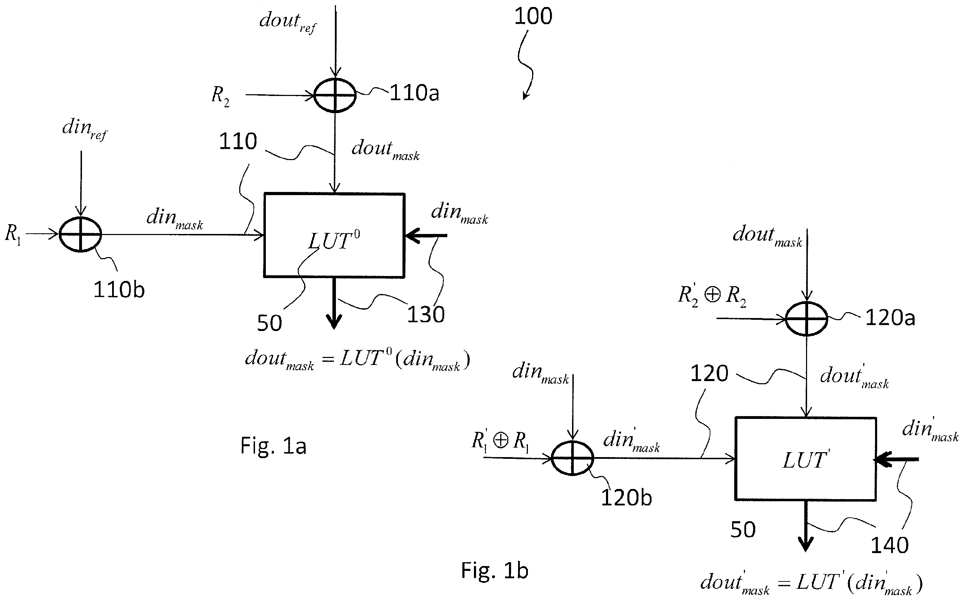

With reference to Figures 1a and 1b the encryption method according to the invention is now described in greater detail, specifically the initialization procedure 100 according to the invention, which writing initialization values in the look-up table, applying at least two successive initialization steps, 110 and 120.

With reference to Figure 1a, represented therein is the step of initialization 110 of a look-up table 50, for example the look-up table of an S-Box for implementing AES encryption. The reference 110 designates the initialization operations, i.e., the operations of writing in the look-up table 50.

In the framework of the above initialization operation 110, first-initialization output data $dout_{ref}$ are sent at input to the look-up table 50, where they are combined, in an XOR block 110a, with the first output mask $R_2$, in order to produce masked output data $dout_{mask}$.

These masked output data $dout_{mask}$ are written in the look-up table 50 at a masked input datum, or, address, $din_{mask}$, which is in turn obtained from a first-initialization address $din_{ref}$ combined in an XOR block 110b with the first input mask $R_1$.

The masked output data $dout_{mask} = dout_{ref} \oplus R_2$ are written in the look-up table 50 at the masked addresses $din_{mask} = din_{ref} \oplus R_1$ according to the formula

$$dout_{mask} = F(din_{mask} \oplus R_1) \oplus R_2$$

$$(1)$$

where $F$ is a generic function $F(x)$ implemented via the look-up table 50; in the case provided by way of example, $F(x)$ may correspond to $S\text{-}Box(x)$, more specifically to one of the suboperations that constitute the inversion, for example the inversion in $GF(2^4)$. If the look-up table 50 were not subject to masking, its content would simply correspond to the function $F(x)$ applied to the inputs. We denote in what follows by $LUT^0$ the function implemented by the masked look-up table, which supplies the masked output data $dout_{mask}$.

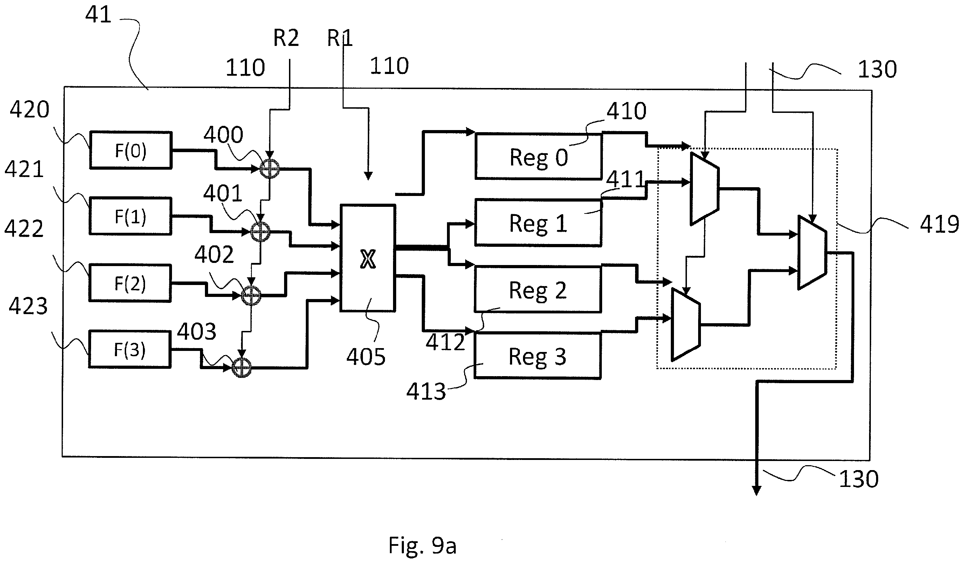

The first-initialization output data $dout_{ref}$ and the first-initialization addresses $din_{ref}$ are plaintext data that usually come from a reference table that implements the function $F$ (see also in this regard blocks 420-423 in Figure 9a, described in the sequel of the present disclosure).

The reference 130 designates, instead, an operation of reading of the data; by accessing the look-up table 50 with the masked address $din_{mask}$, it returns the output

$$dout_{mask} = LUT^0(din_{mask}) \qquad (2)$$

Figure 1b shows, instead, an operation of sequential initialization 120, or re-initialization, that, according to the invention, is carried out after the first initialization 110. According to the invention, it is, in fact, envisaged to define a second input mask $R_1'$ and a second output mask $R_2'$, and to evaluate a combination of input masks $\Delta_1$ as XOR operation between the first input mask $R_1$ and the second input mask $R_1'$, $\Delta_1 = R_1' \oplus R_1$, as well as to evaluate a combination of output masks $\Delta_2$ as XOR operation between the first output mask $R_2$ and the second output mask $R_2'$, $\Delta_2 = R_2' \oplus R_2$ according to the formula

$$dout_{mask}' = LUT^0(din_{mask}' \oplus (R_1' \oplus R_1)) \oplus (R_2' \oplus R_2) \qquad (3)$$

Consequently, once the initialization step 110 has been carried out, instead of repeating the same step 110 and simply using the new, or second, input and output masks $R_1'$ and $R_2'$ for generating a new masked look-up table, the new content $LUT$ of the table 50 is generated starting from the previous version according to step 120, i.e., the content $LUT^0$ deriving from the operation 110, reading in the aforesaid content $LUT^0$ of the previous look-up table for each of the possible addresses that can be generated $din_{mask} = din_{ref} \oplus R1$ the corresponding value stored, which, for what has been said, is $dout_{mask} = dout_{ref} \oplus R_2$. Starting from the masked input datum $din_{mask} = din_{ref} \oplus R_1$, a new masked input datum $din'_{mask} = din_{mask} \oplus \Delta_1$ is generated, where $\Delta_1 = R'_1 \oplus R_1$. It should be noted how, if all the terms are rendered explicit, the new masked input datum $din'_{mask} = din_{mask} \oplus \Delta_1$ will involve cancelling out of the contribution of the first, or past, input mask $R_1$, there remaining only the contribution of the second, or new, input mask $R'_1$, so that

$$din'_{mask} = din_{ref} \oplus R'_1 .$$

Likewise, starting from the masked output datum $dout_{mask} = dout_{ref} \oplus R_2$ a new masked output datum $dout'_{mask} = dout_{mask} \oplus \Delta_2$ is obtained, where $\Delta_2 = R'_2 \oplus R_2$, with a corresponding cancelling out of the contribution of the first, or past, output mask $R_2$, there remaining just the contribution of the second, or new, output mask $R'_2$ so that

$$dout'_{mask} = dout_{ref} \oplus R'_2 .$$

The new masked output datum $dout'_{mask}$ is stored as new content *LUT'* of the look-up table 50 at the address corresponding to the new masked input datum, or address, $din'_{mask}$. This new content *LUT'* of the look-up table 50 is based only upon the content of the second, or new, masks, namely, the input mask $R'_1$ and the output mask $R'_2$, as follows:

$$dout'_{mask} = F(din'_{mask} \oplus (R'_1)) \oplus (R'_2) \qquad (4)$$

Consequently, at output from the look-up table 50, we obtain in a reading operation 140, for a given address specified by input data $din'_{mask}$

$$dout'_{mask} = LUT'(din'_{mask}) \qquad (5)$$

In this way, it may be appreciated how the side-channel of each initialization operation provided by step 120 will be linked to the combination of masks $\Delta_1 = R'_1 \oplus R_1$ rather than to the second input mask $R'_1$ alone, whereas the datum is masked by the second input mask $R'_1$ alone. The same applies to the output datum and the mask $R'_2$. A high-order attack would thus require three elements: the data masked by the second input mask

$$R'_1 \,{}^\text{'},$$

the operation of initialization that involves the combination of masks $\Delta_1 = R'_1 \oplus R_1$, and at least some other operation that involves the first input mask $R_1$ alone.

The method according to the invention has been described, with reference to Figures 1a and 1b, only as regards a first initialization 110 and a re-initialization 120. It is clear that the method according to the invention can be extended iteratively, using more than two masks.

For example, it is possible to carry out an initialization at step 110 with the first input mask $R_1$, a second initialization at step 120 with a combination of the first mask $R_1$ and of the second mask $R'_1$, $R'_1 \oplus R_1$, a third initialization at step 120 with a combination of the second mask $R'_1$ and of a third mask $R''_1$, $R''_1 \oplus R'_1$, a fourth initialization at step 120 with a combination of the third mask $R_1^{''}$ and of a fourth mask $R_1^{'''}$, $R_1^{'''} \oplus R_1^{''}$. The look-up table would then be used for calculations on masked data via the fourth mask $R_1^{'''}$. A side-channel attack would in this case require operating on the latter fourth-initialization operation, as well as on all the previous initializations, from the first to the third.

It should be noted that in general the method according to the invention, also in the embodiment described with reference to Figure 1a and 1b, may be considered as comprising iteration of an initialization step in which the first masks $R_1$ and $R_2$ are set to zero, i.e., the case where the table at start is not masked.

The method according to the invention envisages in general choosing the given number of steps of iteration, i.e., the number of times of execution, of the operation 120 of initialization at the moment of run-time, without requiring any further hardware, simply applying a criterion of trade-off between performance and level of protection.

There now follows a more detailed description of an implementation of the method of Figures 1a and 1b within an AES encryption procedure.

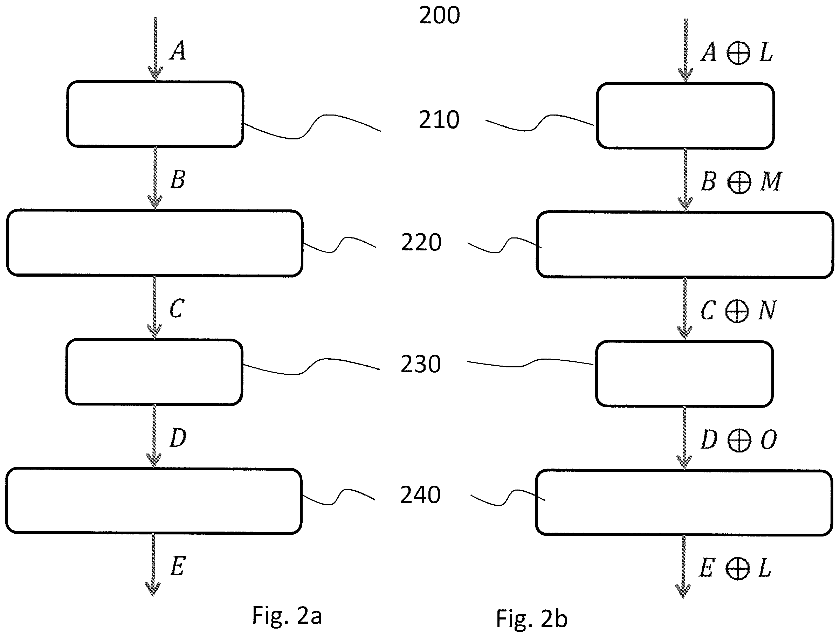

Figure 2a shows an implementation 200 of the AES encryption procedure or algorithm. The steps represented constitute the steps for encryption of a 16-byte block, known as AES state. This procedure 200, as likewise the details of the operations 210, 220, 230, 240 are known to a person skilled in the sector (see, for example, the document available at the URL http://csrc.nist.gov/publications/fips/fips197/fips-197.pdf http://en.wikipedia.org/wiki/Advanced Encryption Standa rd)

The AES state to be encrypted, designated by A, is subjected to a first SubBytes operation 210, supplying at output a state B, which is subjected to a set 220 of operations ShiftRows + MixColumns + AddKey, to generate a state C. The operations 210, 220 correspond to a first round. Then, in a next round, a second SubBytes operation 230 is carried out, to obtain a state D, as well as a further set 230 of operations ShiftRows + MixColumns + AddKey, to generate a state D. There is carried out a number of rounds envisaged by the procedure 200 according to the number of corresponding round subkeys to be added. The various modes of handling of the AES rounds are in any case in themselves known to a person skilled in the sector.

As has been said, the SubBytes operation 210 or 230, which contains a non-linear portion, as will be described in greater detail in what follows, is carried out with the aid of a Substitution Box, or S-Box, which comprises a look-up table.

Prior to start of the AES encryption procedure 200 an initial setting of the S-Box is envisaged that serves as base for initialization via the combinations of masks Δ, of the type carried out in step 110 described previously. The masks according to the method are hence applied to the plaintext (i.e., the initial unencrypted AES state).

During execution of a round, the S-Box (or S-Boxes where a plurality of them is present) is set with the real masks that have been applied to the AES state via the combinations of masks Δ (initialization 120), and the computation envisaged in steps 210 and 220 is then carried out. This is performed at each round.

At the end of the AES encryption procedure 200, the masked S-Boxes are released by carrying out an operation that is the reverse of that of the initial setup, and the masks are removed from the ciphertext that is the product of the AES encryption procedure 200.

During the AES encryption procedure 200, the SubBytes operation at step 210 or 230 is calculated by itself; hence, the look-up table of the S-Box is initialized just before each use so that the table will incorporate the masks applied to the datum that is to be processed, which in general may differ from one datum to another.

It is possible to carry out a number of initializations of the look-up table of the S-Box between two consecutive uses in order to separate the masks associated thereto.

This increases protection against side-channel attacks, given that the possibility of leakage towards a side channel depends upon the sequence of combinations of masks Δ.

These operations of multiple initializations are carried out also during initial setup and at the end of the procedure for final release of the ciphertext. As for the sequence of multiple initializations, the initial setup envisages applying in sequence combinations of masks Δ to the plaintext in such a way as to obtain, upon completion of this step, the AES state protected by just one real mask, i.e., a mask effectively stored in the system unlike the combinations of masks, without this mask having ever been used. Likewise, at the end of the procedure, the real mask is removed from the ciphertext using only combinations of masks Δ, and never directly the real mask.

In order to prevent leakage due to the single masks, just the combinations of masks Δ are generated and passed on for processing, just the combinations of masks Δ are stored in registers, and just the combinations of masks Δ are used for initialization of the look-up table or tables.

Figure 2b shows the masks applied by the method with reference to the same encryption procedure 200 as that of Figure 2a.

For input to the S-Box (1-byte input of 16-byte AES states), input masks L are provided for masking in the first round (steps 210-220), and the input masks N are provided for masking in the second round (steps 230-240). Output masks M are provided for masking in the first round (steps 210-220), and output masks O are provided for masking in the second round (steps 230-240) .

In this regard, it is possible to consider re-employing the masks to minimize their number using, for example, the following criterion: a distance of two rounds between two values associated to one and the same mask.

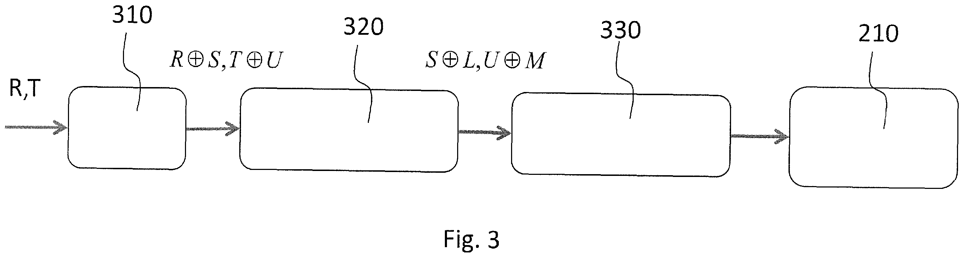

Figure 3 shows the masks, of 1 byte each, for initialization of each S-Box prior to the procedure 200. The size of the masks in this step depends upon how many S-Boxes are present. Hence, with 16 S-Boxes there will be 16 bytes for each mask, but with just one S-Box there will be 1 byte for each mask. Input masks $R, S$ are used for the initial setup and final release, and output masks $T, U$ are used for the initial setup and final release.

As shown in Figure 3, in a step 310 initialization of the input and of the output with the setup masks $R$ (input mask) and $T$ (output mask) is carried out. Next, in a step 320 an initialization of the table is carried out via the combination of the setup mask $R$ (input mask) with the mask $S$ (input mask). The same is performed on the output using the setup masks $T$ and $U$. Next, a further initialization step 330 is carried out with the input mask $L$ and the output mask $M$, shown with reference to Figure 2B, by combining them with the setup masks $S$ and $U$. The operation 210 of the first round, in which the data are masked by the masks $L$ and $M$, is then performed.

Hence, with reference to what is shown in Figure 3, as regards the first two rounds of the AES encryption algorithm in the example in which there is envisaged re-use of the masks every two rounds, the following 16-byte values are generated and stored, which are then also used for initialization of the S-Boxes:

$$\alpha = M \oplus O$$

$$\beta = B \oplus M$$

$$\gamma = T \oplus U$$

$$\delta = T$$

$$\varepsilon = R \oplus S$$

$$\zeta = R$$

As may be noted, except for the initial masks $R$ and $T$, only combinations of two logic values are generated and stored. For example, the logic value of the mask $M$ that protects the AES state is never generated alone, is never stored alone, and is never used alone to initialize the S-Boxes. This ensures that the side-channel information produced by handling of the values listed above will never be associated to a single mask, but to combinations of masks, which also contribute to the need to gather various points to carry out an attack.

In order to maintain consistency between the masks applied to the data during the linear part of the algorithm, indicated by blocks 220 and 240 in Figure 2, further values can be calculated starting from the ones introduced previously, as follows:

$$\eta = S \oplus \bar{L} = MixCols(\alpha \oplus \bar{\beta}) \oplus [\varepsilon \oplus MixCols(\gamma)] \oplus [\zeta \oplus MixCols(\delta)]$$

$$\theta = L \oplus N = MixCols(\alpha)$$

where:

$L = MixCols(O)$
$N = MixCols(M)$

As may be noted, the values to be derived for use of the masks in the linear part of the algorithm are also calculated starting from combinations of two or more logic values, given that the operations to be performed are linear. This ensures that also the side-channel information produced by computation of these values will never be associated to a single mask, but to combinations of masks.

From what has been described so far, it emerges clearly how the method according to the invention envisages carrying out frequent initializations of the look-up tables.

The time of latency involved in an operation of initialization depends upon the size of the look-up table and limits both the performance and the efficiency of the countermeasures against side-channel attacks.

In hardware implementations, for requirements linked to the area of the circuits, the look-up tables are usually implemented via a reprogrammable memory such as a RAM. The RAM must be filled for initialization by entering one datum at a time, as has been mentioned, entering all the possible input values and storing the respective output values at the corresponding addresses. Hence, it emerges clearly how the latency required depends upon the size of the look-up table (for example, 256 input data for the AES S-Box) .

Whenever the mask changes, the look-up table must be initialized with that mask.

Known countermeasures envisage:

- initializing the look-up table before each operation as completely new masks and hence paying the price of all the latencies associated to these operations; or
- reusing the same masks for different operations and data, rendering, however, the process more vulnerable to high-order side-channel attacks.

In implementations that present constraints, for example, of area or of memory size available, a single look-up table is shared between all the bytes of the data, rendering even more evident the disadvantage deriving from initialization.

In the light of the initialization operations, in particular in the context of the masking procedure described, the countermeasures against multi-variate high-order attacks require a look-up table that enables:

- initialization of the entire table preferably in a single cycle, generating all the data to be entered and storing them in the same cycle; it should be noted that falling in any case within the scope of the present invention are also implementations that operate on a greater number of cycles; the example itself described herein can be used on a number of cycles if the latency due to the initialization operations is accepted; and
- initialization via the combination of masks $\Delta$; in this way, the leakage that may possibly be analysed for a side-channel attack is correlated to the combination of masks $\Delta$ and not to the masks proper.

Consequently, to meet the need of balancing performance and efficiency in carrying out the initialization operations, in particular the operations of the method according to the invention, which involves repeated initialization operations, according to the invention an S-Box device is here proposed that has a specific structure of look-up table, in particular the look-up table that implements the function required for the AES S-Box.

In order to exploit as much as possible the effectiveness of protection of the initializations within the method according to the invention, a device is moreover proposed comprising at least one look-up table, wherein said look-up table is divided into smaller look-up tables, in particular applying the so-called "tower of fields" architecture. The modes of implementation of this architecture with respect to the AES S-Box are in themselves known, in so far as it is known to use the tower-of-fields architecture for reducing the area occupation of the AES S-Box when it is implemented using pure combinational logic.

Via the operation of division of the look-up table into smaller tables, it becomes possible to replace the RAM normally used as reprogrammable memory with flip-flop memory structures, in particular structures that define memory registers. This thus makes it possible to write all the registers in a single clock cycle and consequently carry out initialization of the entire look-up table, in particular of the entire S-Box, in a single clock cycle.

Moreover, as will be described in what follows, implementation of the operations in subfields by the look-up tables ensures freedom of regulation of the tables in order to improve the properties thereof required for an effective protection against side-channel attacks.

In this way, advantageously, the countermeasures against side-channel attacks may have a lower impact on the performance of the encryption system, whereas the countermeasures against high-order attacks of the method illustrated in Figures 1a, 1b are, instead, possible also in devices that present a limitation in regard to the area available.

In general, with the device proposed comprising a look-up table, the designer has a greater freedom in devising implementation of the tables, in so far as they are no longer linked to the structure of the RAM cell, and a greater freedom in defining the scheme of the countermeasure, in so far as the disadvantage deriving from execution of the initialization operations is removed.

The device comprising look-up tables proposed herein can moreover be exploited also for countermeasures in regard to so-called "fault attacks", i.e., attacks with injection of faults.

There now follows a more detailed description of the device comprising an S-Box suitable for operating with the method according to the invention.

It is envisaged to implement the S-Box isolating the non-linear part of the multiplicative inversion in the finite field, and performing it via finite subfields.

The S-Box, which normally operates on the specific Galois field $GF(2^8)$ described in the FIPS197 standard cited above, is implemented via decomposition into smaller finite fields, $GF(2^4)^2$ and $GF((2^2)^2)^2$.

More precisely, the above operation of composition envisages:

a) mapping all the elements of the Galois field $GF(2^8)$ over the composite field using an isomorphism;
b) computing the multiplying inverse in the composite field; and
c) mapping the results of the above computation over the Galois field $GF(2^8)$, using the inverse of the isomorphism used for decomposition.

As has been said, the procedure of decomposition into smaller finite fields is in itself known and for any detail the reader is referred, for example, to the paper by Satoh et al. "A Compact Rijndael Hardware Architecture with S-Box Optimization", sect. 4.1-4.3, pp. 245-248 available at the URL http://class.ece.iastate.edu/tyagi/cpre681/papers/satoh asiacryptt.pdf. In particular, for the steps a) and c), by way of example, it is possible to use the isomorphism described on page 248, Eq. 13, and for step b) Eqs. 9, 10, 11 on page 247.

It is envisaged to implement this approach in an extended way in order to maintain the hardware compact.

In particular, it is envisaged to replace the single 256x8 look-up table used in the S-Box with a plurality of smaller reprogrammable look-up tables.

As shown in Figure 4, an S-Box 10 presents to the input data $din[8]$, which specify an 8-bit address, two computation modules, of which a module 11 for performing a non-linear operation, in particular inversion of the SubBytes operation. This module 11 is the main reason why the S-Box is implemented via a look-up table. The module 11 for performing a non-linear operation supplies its own output data $dout[8]$, with the result of the inversion, to a portion 12 for performing a linear operation, specifically the affine transformation of the SubBytes operation. The module 12 supplies at output the output data of the S-Box $sbox\_dout[8]$, i.e., the input data $din[8]$ on which the SubBytes operation has been carried out. In the above module 12 it is possible to maintain the additive masking, as is applies in a known way in the KeyAddition and MixColumns operations.

The inventive idea is instead applied in particular in a look-up table in the module 11 for implementing the inversion.

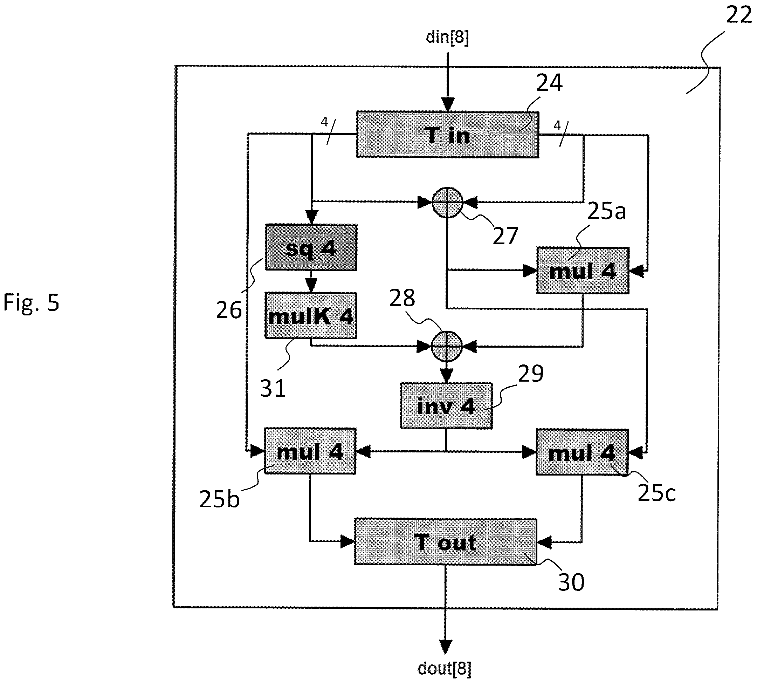

Figure 4 represents the scheme for the direct S-Box function alone, used for AES encryption. In the case of decryption, the inverse function is necessary, called $Sbox^{-1}$. As shown in the paper by Satoh *et al.* referred to previously, it is possible to re-use the same inversion of block 11 for both functions by adding a further block for the inverse function of the affine transformation. This solution is represented in Figure 5 on page 246 of the paper cited. It is thus clear that the inventive idea that is described for block 11 enables implementation of both the direct function and the inverse function of the SubBytes operation.

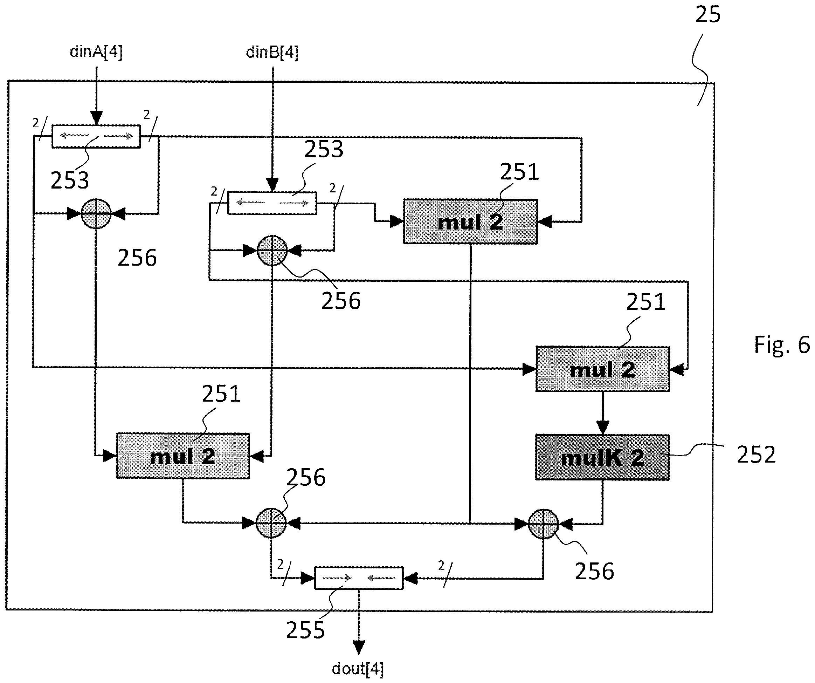

For a better understanding, described in detail in Figure 5 is an implementation 22, which already presents a decomposition in $GF(2^4)$ of the function of inversion of the SubBytes operation, which normally operates, instead, on the Galois field $GF(2^8)$. The input data $din[8]$ are supplied to a transformation block 24 that implements the isomorphism that maps the elements of the 8-bit field $GF(2^8)$, into elements of the subfields $GF(2^4)$ by dividing the input into 4-bit blocks. This type of implementation is in itself known (see, for example, the aforementioned paper by Satoh *et al.*, Figure 6) and comprises three 4-bit multipliers 25a, 25b, 25c that carry out the function MUL4 in the field $GF(2^4)$, a squaring block 26, a block for multiplication by a constant 31 (corresponding to one of the polynomials chosen for the decomposition into subfields), a first XOR block 27, a second XOR block 28 for the sum of elements of the field, and a look-up table 29 for the inversion INV4. Upstream of the output is a transformation block 30 that recomposes the 8-bit datum to form the output data $dout[8]$, implementing the inverse isomorphism of block 24. Operation of this circuit, as has been said, is in itself known.

It should be noted that in this known implementation there is a single look-up table 29 that operates on 4-bit data, whereas the rest of the modules is implemented via combinational logic.

Each block represented in Figure 5 can be in turn decomposed into subfields and hence into blocks that operate on elements of smaller size. Figure 6 shows in detail, to facilitate understanding, one of the multiplication modules MUL4 25, which in turn, in a known way, is implemented via three multipliers, three 2-bit multipliers 251, and one multiplier for multiplication by a constant 252. This multiplication module MUL4 25 also comprises at input two transformation blocks 253 for dividing the two pairs of 4-bit input data $dinA[4]$ and $dinB[4]$, a transformation block 255 for recomposing the 4-bit output data $dout[4]$, and XOR modules 256 for carrying out the additions.

It should be noted that the fact that the multiplier 25 has a pair of 4-bit input data, $dinA[4]$ and $dinB[4]$, renders not convenient implementation thereof via a LUT because it is cumbersome, thus annulling the benefits of the tower-of-fields decomposition.

It is envisaged to implement the function of inversion required for the module 11 of the S-Box device by exploiting the fact that the algebraic structure enables decomposition of the function. The criteria listed below are followed:

- implementing the linear operations via combinational logic;
- implementing the non-linear operations via look-up tables; and
- dividing the above look-up tables until they have a sufficiently small size; by way of example, for the multiplications it is preferable to use $GF((2^2)^2)^2$, because, as has been said, it would not be convenient to have the module MUL4 25 implemented as a LUT; for the inversion it is possible to choose whether to stop at $GF(2^4)$ or also in this case use $GF((2^2)^2)^2$.

Each of the look-up tables that implement non-linear operations is masked by a respective pair of, input and output, masks.

In general, the original LUT is made up of 256x8=2048 bits. By appropriately decomposing the blocks with the tower-of-fields method, a number of LUTs are obtained, which, however, are smaller. For example, the inversion in $GF(2^4)$ is made up of 16x4=64 bits. Or else, each of the operations MUL2 in $GF((2^2)^2)^2$ is made up of 16x2=32 bits. Since in the example described all the LUTs as a whole require a fraction of the memory bits required for the entire LUT of the S-Box, they can be implemented, and are preferably implemented, using flip-flops.

In this way, the initialization of the entire LUT can be obtained in a single clock cycle given that all the data can be entered in parallel in one and the same clock cycle. Likewise, all the LUTs can be initialized in parallel.

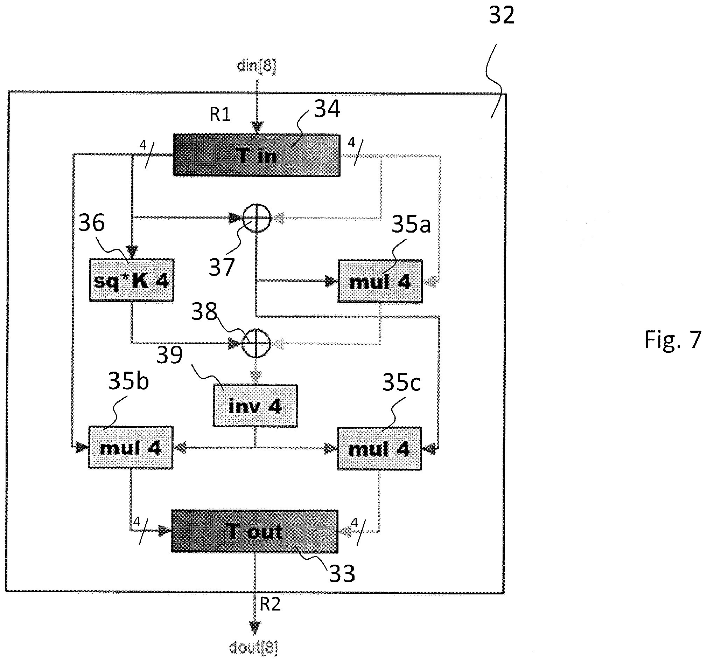

Figure 7 hence describes in detail an implementation 32 of the inversion module of the S-Box 33 suitable for operating with the method according to the invention. Unlike the implementation 22 of Figure 5, the squaring with multiplication by a constant (condensed in a single block 36), the inversion INV4 39, in addition to the blocks forming the three 4-bit multipliers 35a, 35b, 35c are obtained through look-up tables that incorporate input and output masks. A transformation block 33 that recomposes the data is provided upstream of the output.

In particular, in the above module 32, 8-bit masks are provided for the input data *din[8]* and the output data *dout*[8]. Within the module 32, additional 4-bit masks are present for the outputs of the squaring block 36, of the look-up table 39 for the inversion INV4, and of one of the multipliers 35. Moreover, since, as is shown in Figure 7, the multiplier MUL4 35 is in turn implemented in a way similar to the multiplier 25, but also in this case condensing in a single block 352 a multiplication with the multiplication by a constant and implementing both this block 352 and the multipliers 351 as look-up tables, three additional 2-bit masks are also provided.

Hence, as a whole, the circuit of Figure 7 uses 34 independent bits for the mask. Even though the function of multiplication is the same, in practice it is possible to consider that there are different LUTs, because they will have different masks. Each of the three multipliers MUL4 in actual fact is made up of three look-up tables. The implementation described in Figure 7 shows a 4-bit inversion in block 39, but it is clear that also this block, in variant embodiments, may be decomposed into 2-bit inversion blocks.

It should be noted that the decomposition with use of LUTs enables decomposition of the original function, i.e., the S-Box, not necessarily having to use only operations defined over the fields, such as for example multiplication, squaring, and inversion. Even though the known tower-of-fields decompositions are always based on the above few operations, the solution proposed via the use of LUTs enables definition and use of functions that do not have any relation with the above classic operations, or else condensation of a number of operations in one and the same LUT (as is the case described for blocks 25, 35, which carry out squaring with multiplication by a constant), an operation that is problematical to implement with the combinational logic and hence is rarely used. Moreover, since the decomposition of the S-Box device described herein is functional for protection from side-channel attacks, the LUTs can be designed according to this purpose and not for the known use of reducing the area, for example by implementing a decomposition that will maintain redundant operations, which are less efficient from the standpoint of area occupation, but can produce benefits as regards protection against side-channel attacks.

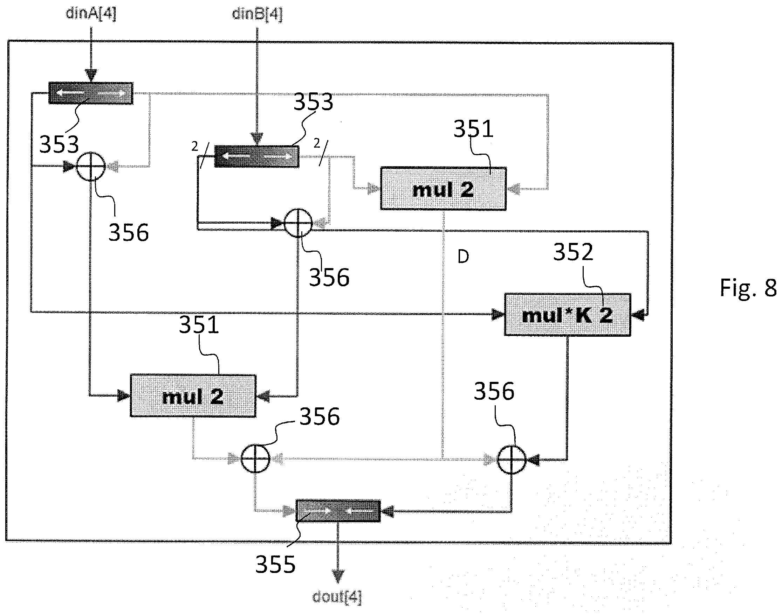

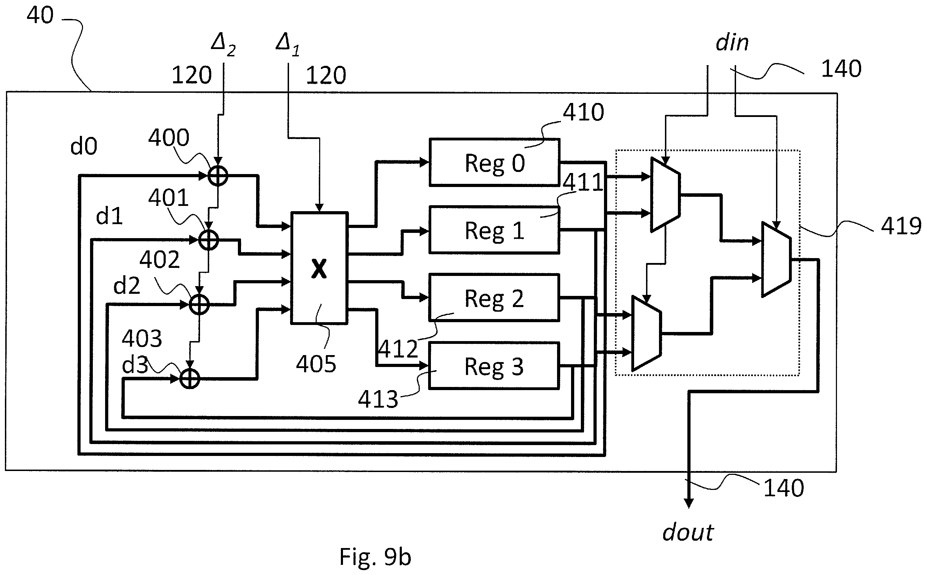

Figure 9b shows an implementation of a look-up table 40 according to the invention, which operates on 2-bit data at input and 2-bit data at output. In general, the size in bits of the input data may differ from the size in bits of the output data. The scheme of this table 40 may be used for building, for example, the table 351 of Figure 8 and implementing the multiplication function, but may moreover be used for implementing any LUT used within the S-Box proposed. In this table 40 the method according to the invention described with reference, for example, to Figure 1b is moreover used.

Designated by 410-413 are registers that operate as memory cells for the data contained in the LUT, which are designated, respectively, by *d0, ..., d3*. Each of these data *d0, ..., d3* are sent from the output of the respective register 410-413 in parallel to a block 419 for selection of the output datum *dout* and to a respective XOR module 400-403, which carries out thereon the logic XOR with the logic combination of output masks $\Delta_2$. Next, an interconnection matrix 405, provided with a number of multiplexers, under the control of the logic combination of input masks $\Delta_1$, carries out masking, storing the outputs of the XOR modules 400-403 in the registers 410-413 in the order indicated by the logic combination of input masks $\Delta_1$.

The selection block 419 is a set of multiplexers, which, in a way of in itself known, under the control of the input datum *din,* which contains the address of the data in the LUT, selects the appropriate output of the registers 410-413, supplying it as output datum *dout,* thus implementing the reading operation 140 of Figure 1b.

It is emphasized how the look-up-table structure 40 of Figure 9b is here referred to use with the AES S-Box device, but this structure 40 can be used for implementing any look-up table that can be initialized via the combinations of masks of the initialization method, even in other encryption algorithms.

Figure 9a shows by way of comparison the implementation of a look-up table 41 according to the known art that uses a method similar to the operation 110 described with reference to Figure 1a. Reference numbers that are the same as the ones used in Figure 9b identify similar components. As may be noted, the XOR modules 400-403 receive at input the first output mask $R_2$ and directly the reference initialization values $F(0), ..., F(3)$, which may be non-modifiable pre-set values, i.e., hardwired, or, as in the example described, may be contained in specific registers 420-423, storing the outputs of the XOR modules 400-403 in the registers 410-413 in the order indicated by the first input mask $R_1$. Advantageously, instead, the table 40 sends to the XOR modules 400-403 the logic combinations of output masks $\Delta_2$ and the data *d0, ..., d3* from the output of the respective register 410-413, storing the outputs of the XOR modules 400-403 in the registers 410-413 in the order indicated by the logic combination of input masks $\Delta_1$.

Hence, from the description the advantages of the invention emerge clearly.

The encryption method according to the invention, via operations of initialization based upon combinations of masks, means that the possible correlations obtained by side-channel attacks are always linked to these combinations, but not to the values of the individual masks that originate them.

The proposed device comprising look-up tables, via a decomposition of the table of the S-Box of the AES encryption into smaller tables, advantageously manages to implement these tables via flip-flop structures, which can be updated in a single clock cycle. Consequently, the encryption method according to the invention implemented in an apparatus that comprises the S-Box device according to the invention can be executed in a fast way, enabling a repeated and flexible use of the initialization steps according to the invention that renders the AES encryption procedure even more impervious to side-channel attacks also of high order.

In this way, advantageously, the countermeasures against side-channel attacks can have a lower impact on the performance of the encryption system, whereas, instead, it is possible to implement the countermeasures against high-order attacks according to the method of the invention also in devices that present limitation in regard to the area available.

Of course, without prejudice to the principle of the invention, the details and embodiments may vary, even significantly, with respect to what has been described herein purely by way of example, without thereby departing from the sphere of protection, which is defined by the annexed claims.

The method according to the invention applies in general to data stored in data media and in particular to data stored in data media of any apparatus that envisages execution of an encryption algorithm comprising operations that include access to a look-up table, in particular an AES encryption system, for example in set-top boxes or smartcards. This AES encryption system can be regarded as a peripheral within a System-on-Chip, which is not used as stand-alone component, but is integrated in a chip of a smartcard or a chip of a set-top box or even chips of other applications that require AES encryption.

In general, the above apparatus comprises or is associated to data-processing means and, in particular, comprises one or more processors.

**Claims**

1. An encryption method that envisages performing an encryption procedure (200) including operations (210) that comprise accessing a look-up table (50), said operation of accessing a look-up table (50) comprising an operation of initialization (100) of the look-up table (50) that comprises writing initialization values in said look-up table (50) by applying (110; 110, 120) a first input mask ($R_1$) to input data (*din, din$_{ref}$*) that identify a location of said look-up table (50), obtaining first masked location identifying data (*din$_{mask}$*) and a first output mask ($R_2$) to data (*dout, dout$_{ref}$*) at output from a location of said look-up table (50), obtaining a first masked output data (*dout$_{mask}$*), wherein at least one second step of initialization (120) of said look-up table (50), following said operation of initialization (100), is carried out, which comprises:

providing at least one second input mask $(R_1^{'})$ and one second output mask $(R_2^{'})$ ; and computing corresponding second initialization values by computing a first logic combination ($\Delta_1$) which is the result of an operation of exclusive OR (XOR) between the values of said first input mask ($R_1$) and said second input mask $(R_1^{'})$ , said first logic combination ($\Delta_1$) being

applied by an exclusive OR operation to said first masked location identifying data ($din_{mask}$) to obtain second input data ($din_{mask}$') and applying by an exclusive OR operation first masked output data ($dout_{mask}$) to a second logic combination ($\Delta_2$) which is the result of an operation of exclusive OR (XOR) between the values of said first output mask $( R_2^{'} )$ and said second output mask $( R_2^{'} )$ to obtain second output data ($dout_{mask}$'), so that in a resulting look-up table (50) the second initialization values includes the second input data ($din_{mask}$') masked only by the second input mask $( R_1^{'} )$ and the output data ($dout_{mask}$') masked only by the second output mask $( R_2^{'} )$.

2. The method according to Claim 1 , **characterized in that** it comprises repeating said second step of initialization (120) for a given number of times, supplying each time a further input mask $( R_1^{''} )$ and a further output mask $( R_2^{''} )$, and computing said first and second logic combinations as a function of said further input mask $( R_1^{''} )$ or output mask $( R_2^{''} )$ and of the input mask $( R_1^{'} )$ or output mask $( R_2^{'} )$ provided previously.

3. The method according to Claim 2, **characterized in that** said given number of times is chosen, in particular at run-time, for regulating the performance or the level of protection of the encryption procedure (200) in regard to side-channel attacks.

4. The method according to any one of the preceding claims, **characterized in that** said encryption procedure (200) is an AES (Advanced Encryption Standard) encryption procedure and **in that** said initialization steps (110, 120) are applied to the SubBytes operation (210) of said AES encryption procedure (200).

5. The method according to Claim 4, **characterized in that** it comprises re-using the masks applied to different data in different rounds of said AES encryption procedure (200) for minimizing the number thereof, in particular by setting a distance of two rounds of AES operations between two values associated to one and the same mask.

6. An encryption apparatus configured for implementing an encryption procedure (200) including operations (210) that comprise accessing a look-up table (50) associated to said encryption apparatus, **characterized in that** it is configured for implementing the operations of the method according to any one of Claims 1 to 5.

7. The apparatus according to Claim 6, **characterized in that** said encryption procedure (200) is an AES (Advanced Encryption Standard) encryption procedure and **in that** said look-up table is comprised in a device of an S-Box type.

8. The apparatus according to Claim 7, **characterized in that** said device of an S-Box type comprises at least one module (11) configured for performing a non-linear operation in a finite field ($GF(2^8)$) of an encryption method implemented by said encryption apparatus, said module (11) comprising at least one reprogrammable look-up table (50), said module (11) further comprising a plurality of composite look-up tables (40) that implement said non-linear operation in a composite field of finite subfields ($GF(2^4)^2$; $GF((2^2)^2)^2$) deriving from said finite field ($GF(2^8)$), each of said composite look-up tables (40) being smaller than a look-up table (50) that is able to implement autonomously said non-linear operation in a finite field ($GF(2^8)$).

9. The apparatus according to Claim 6, Claim 7 or Claim 8, **characterized in that** said composite look-up tables (40) are implemented via flip-flop structures, which are configured for being initialized by said first logic combination ($\Delta_1$) of said first input mask ($R_1$) and second said input mask $( R_1^{'} )$ and said second logic combination ($\Delta_2$) of said first output mask $( R_2^{'} )$ and said second output mask $( R_2^{'} )$.

10. The apparatus according to any one of Claims 6 to 9, **characterized in that** it is configured for carrying out said initialization operations in one clock cycle.

11. The apparatus according to any one of Claims 6 to 10, **characterized in that** it is comprised in a set-top box and/or in a smart card.

12. A computer program product that can be loaded into the memory of at least one computer, the computer program product comprising portions of software code suitable for implementing the steps of the method according to any one of Claims 1 to 5 when the program is run on said at least one computer.

**Patentansprüche**

1. Verschlüsselungsverfahren, das die Durchführung eines Verschlüsselungsvorgangs (200) einschließlich Operationen (210) vorsieht, die den Zugriff auf eine Nachschlagetabelle (50) umfassen, wobei die Operation des Zugriffs auf eine Nachschlagetabelle (50) umfasst:

eine Initialisierungsoperation (100) der Nachschlagetabelle (50), die das Schreiben von Initialisierungswerten in die Nachschlagetabelle (50) durch Anwenden (110; 110, 120) einer ersten Eingabemaske ($R_1$) auf Eingabedaten ($din$, $din_{ref}$), die eine Stelle der Nachschlagetabelle (50) identifizieren, umfasst, wobei erste maskierte Stellenidentifizierungsdaten (**$din_{mask}$**) und eine erste Ausgabemaske ($R_2$) auf Daten (**$dout$, $dout_{ref}$**) bei der Ausgabe von einer Stelle der Nachschlagetabelle (50) erhalten werden, wobei ein erster maskierter Ausgabedatenwert (**$dout_{mask}$**) erhalten wird,
wobei
mindestens ein zweiter Schritt der Initialisierung (120) der Nachschlagetabelle (50) im Anschluss an die Initialisierungsoperation (100) ausgeführt wird, der umfasst:

Bereitstellen mindestens einer zweiten Eingabemaske ($R'_1$) und einer zweiten Ausgabemaske ($R'_2$); und
Berechnen entsprechender zweiter Initialisierungswerte durch
Berechnen einer ersten logischen Kombination ($\Delta_1$), die das Ergebnis einer Operation von Exklusiv-ODER (XOR) zwischen den Werten der ersten Eingabemaske ($R_1$) und der zweiten Eingabemaske ($R'_1$) ist, wobei die erste logische Kombination ($\Delta_1$) durch eine Exklusiv-ODER-Operation auf die ersten maskierten Stellenidentifizierungsdaten ($din_{mask}$) angewendet wird, um zweite Eingabedaten ($din_{mask}'$) zu erhalten, und durch eine Exklusiv-ODER-Operation erste maskierte Ausgabedaten ($dout_{mask}$) auf eine zweite logische Kombination ($\Delta_2$) angewendet werden, die das Ergebnis einer Operation von Exklusiv-ODER (XOR) zwischen den Werten der ersten Ausgabemaske ($R'_2$) und der zweiten Ausgabemaske ($R'_2$) ist, um zweite Ausgabedaten ($dout_{mask}'$) zu erhalten, so dass in einer resultierenden Nachschlagetabelle (50) die zweiten Initialisierungswerte die zweiten Eingabedaten ($din_{mask}'$), die nur durch die zweite Eingabemaske ($R'_1$) maskiert sind, und die Ausgabedaten ($dout_{mask}'$), die nur durch die zweite Ausgabemaske ($R'_2$) maskiert sind, enthalten.

2. Verfahren nach Anspruch 1, **dadurch gekennzeichnet, dass** es das Wiederholen des zweiten Initialisierungsschrittes (120) für eine gegebene Anzahl von Malen, jedes Mal das Liefern einer weiteren Eingabemaske ($R''_1$) und einer weiteren Ausgabemaske ($R''_2$) und das Berechnen der ersten und zweiten logischen Kombinationen als eine Funktion der weiteren Eingabemaske ($R''_1$) oder Ausgabemaske ($R''_2$) und der zuvor bereitgestellten Eingabemaske ($R'_1$) oder Ausgabemaske ($R'_2$) umfasst.

3. Verfahren nach Anspruch 2, **dadurch gekennzeichnet, dass** die vorgegebene Anzahl von Malen insbesondere zur Laufzeit gewählt wird, um die Leistung oder das Schutzniveau des Verschlüsselungsvorgangs (200) im Hinblick auf Seitenkanalangriffe zu regeln.

4. Verfahren nach einem der vorhergehenden Ansprüche, **dadurch gekennzeichnet, dass** der Verschlüsselungsvorgang (200) ein AES (Advanced Encryption Standard)-Verschlüsselungsvorgang ist und dass die Initialisierungsschritte (110, 120) auf die SubBytes-Operation (210) des AES-Verschlüsselungsvorgangs (200) angewendet werden.

5. Verfahren nach Anspruch 4, **dadurch gekennzeichnet, dass** es die Wiederverwendung der auf verschiedene Daten in verschiedenen Runden des AES-Verschlüsselungsvorgangs (200) angewendeten Masken umfasst, um deren Anzahl zu minimieren, insbesondere durch Einstellen eines Abstands von zwei Runden von AES-Operationen zwischen zwei Werten, die ein und derselben Maske zugeordnet sind.

**6.** Verschlüsselungsvorrichtung, die zum Implementieren eines Verschlüsselungsvorgangs (200) ausgelegt ist, einschließlich Operationen (210), die den Zugriff auf eine der Verschlüsselungsvorrichtung zugeordnete Nachschlagetabelle (50) umfassen, **dadurch gekennzeichnet, dass** sie zum Implementieren der Operationen des Verfahrens gemäß einem der Ansprüche 1 bis 5 ausgelegt ist.

**7.** Vorrichtung nach Anspruch 6, **dadurch gekennzeichnet, dass** der Verschlüsselungsvorgang (200) ein AES (Advanced Encryption Standard) Verschlüsselungsvorgang ist und dass die Nachschlagetabelle in einem Gerät vom Typ S-Box umfasst ist.

**8.** Vorrichtung nach Anspruch 7, **dadurch gekennzeichnet, dass** die Vorrichtung vom Typ S-Box mindestens ein Modul (11) umfasst, das für die Durchführung einer nichtlinearen Operation in einem endlichen Feld ($GF(2^8)$) eines durch die Verschlüsselungsvorrichtung implementierten Verschlüsselungsverfahrens ausgelegt ist, wobei das Modul (11) mindestens eine umprogrammierbare Nachschlagetabelle (50) umfasst, wobei das Modul (11) ferner mehrere zusammengesetzte Nachschlagetabellen (40) umfasst, die die nichtlineare Operation in einem zusammengesetzten Feld von endlichen Unterfeldern ($GF(2^4)^2$; $GF((2^2)^2)^2$) implementieren, die von dem endlichen Feld ($GF(2^8)$) abgeleitet sind, wobei jede der zusammengesetzten Nachschlagetabellen (40) kleiner als eine Nachschlagetabelle (50) ist, die in der Lage ist, die nichtlineare Operation in einem endlichen Feld ($GF(2^8)$) autonom zu implementieren.

**9.** Vorrichtung nach Anspruch 6, Anspruch 7 oder Anspruch 8, **dadurch gekennzeichnet, dass** die zusammengesetzten Nachschlagetabellen (40) über Flip-Flop-Strukturen implementiert sind, die dazu ausgelegt sind, durch die erste logische Kombination ($\Delta_1$) der ersten Eingabemaske ($R_1$) und der zweiten Eingabemaske ($R'_1$) und die zweite logische Kombination ($\Delta_2$) der ersten Ausgabemaske ($R'_2$) und der zweiten Ausgabemaske ($R'_2$) initialisiert zu werden.

**10.** Vorrichtung nach einem der Ansprüche 6 bis 9, **dadurch gekennzeichnet, dass** sie dazu ausgelegt ist, die Initialisierungsoperationen in einem Taktzyklus durchzuführen.

**11.** Vorrichtung nach einem der Ansprüche 6 bis 10, **dadurch gekennzeichnet, dass** sie in einer Set-Top-Box und/oder in einer Smartcard umfasst ist.

**12.** Computerprogrammprodukt, das in den Speicher mindestens eines Computers geladen werden kann, wobei das Computerprogrammprodukt Teile eines Softwarecodes umfasst, der geeignet ist, die Schritte des Verfahrens nach einem der Ansprüche 1 bis 5 zu implementieren, wenn das Programm auf dem mindestens einen Computer ausgeführt wird.

**Revendications**

**1.** Procédé de chiffrement envisageant l'exécution d'une procédure de chiffrement (200) comportant des opérations (210) qui comprennent l'accès à une table de correspondance (50), ladite opération d'accès à une table de correspondance (50) comprenant
une opération d'initialisation (100) de la table de correspondance (50) qui comprend l'écriture de valeurs d'initialisation dans ladite table de correspondance (50) par application (110; 110, 120) d'un premier masque d'entrée ($R_1$) à des données d'entrée ($din, din_{ref}$) qui identifient un emplacement de ladite table de correspondance (50), obtenant des premières données d'identification d'emplacement masquées ($din_{mask}$), et d'un premier masque de sortie ($R_2$) à des données ($dout, dout_{ref}$) en sortie d'un emplacement de ladite table de correspondance (50), obtenant des premières données de sortie masquées ($dout_{mask}$),
dans lequel au moins une deuxième étape d'initialisation (120) de ladite table de correspondance (50), qui suit ladite opération d'initialisation (100), est effectuée, qui comprend :

la fourniture d'au moins un deuxième masque d'entrée ($R_1'$) et un deuxième masque de sortie ($R_2'$) ; et
le calcul de deuxièmes valeurs d'initialisation correspondantes par calcul d'une première combinaison logique ($\Delta_1$) qui est le résultat d'une opération OU exclusif (XOR) entre les valeurs dudit premier masque d'entrée ($R_1$) et dudit deuxième masque d'entrée ($R_1'$), ladite première combinaison logique ($\Delta_1$) étant appliquée par une opération OU exclusif auxdites premières données d'identification d'emplacement masquées ($din_{mask}$) pour obtenir des deuxièmes données d'entrée ($din_{mask}'$), et application, par une opération OU exclusif, de premières données de sortie masquées ($dout_{mask}$) à une deuxième combinaison logique ($\Delta_2$) qui est le résultat d'une opération OU exclusif (XOR) entre les valeurs dudit premier masque de sortie ($R_2'$) et dudit deuxième masque

de sortie ($R_2$') pour obtenir des deuxièmes données de sortie ($dout_{mask}$'), de sorte que dans une table de correspondance résultante (50), les deuxièmes valeurs d'initialisation comprennent les deuxièmes données d'entrée ($din_{mask}$') masquées seulement par le deuxième masque d'entrée ($R_1$') et les données de sortie ($dout_{mask}$') masquées seulement par le deuxième masque de sortie ($R_2$').

2. Procédé selon la revendication 1, **caractérisé en ce qu'**il comprend la répétition de ladite deuxième étape d'initialisation (120) un nombre donné de fois, la fourniture à chaque fois d'un masque d'entrée supplémentaire ($R_1$'') et d'un masque de sortie supplémentaire ($R_2$'') , et le calcul desdites première et deuxième combinaisons logiques en fonction dudit masque d'entrée supplémentaire ($R_1$'') ou masque de sortie supplémentaire ($R_2$'') et du masque d'entrée ($R_1$') ou masque de sortie ($R_2$') fourni précédemment.

3. Procédé selon la revendication 2, **caractérisé en ce que** ledit nombre donné de fois est choisi, en particulier au moment de l'exécution, pour réguler les performances ou le niveau de protection de la procédure de chiffrement (200) vis-à-vis d'attaques par canal auxiliaire.

4. Procédé selon l'une quelconque des revendications précédentes, **caractérisé en ce que** ladite procédure de chiffrement (200) est une procédure de chiffrement AES (Advanced Encryption Standard, norme de chiffrement avancé) et **en ce que** lesdites étapes d'initialisation (110, 120) sont appliquées à l'opération SubBytes (210) de ladite procédure de chiffrement AES (200).

5. Procédé selon la revendication 4, **caractérisé en ce qu'**il comprend la réutilisation des masques appliqués à différentes données dans différentes rondes de ladite procédure de chiffrement AES (200) pour minimiser le nombre de ceux-ci, en particulier par fixation d'une distance de deux rondes d'opérations AES entre deux valeurs associées à un seul et même masque.

6. Appareil de chiffrement configuré pour mettre en œuvre une procédure de chiffrement (200) comportant des opérations (210) qui comprennent l'accès à une table de correspondance (50) associée audit appareil de chiffrement, **caractérisé en ce qu'**il est configuré pour mettre en œuvre les opérations du procédé selon l'une quelconque des revendications 1 à 5.

7. Appareil selon la revendication 6, **caractérisé en ce que** ladite procédure de chiffrement (200) est une procédure de chiffrement AES (Advanced Encryption Standard) et **en ce que** ladite table de correspondance est comprise dans un dispositif du type S-Box.

8. Appareil selon la revendication 7, **caractérisé en ce que** ledit dispositif du type S-Box comprend au moins un module (11) configuré pour exécuter une opération non linéaire dans un corps fini ($GF(2^8)$) d'un procédé de chiffrement mis en œuvre par ledit appareil de chiffrement, ledit module (11) comprenant au moins une table de correspondance reprogrammable (50), ledit module (11) comprenant en outre une pluralité de tables de correspondance composites (40) qui mettent en œuvre ladite opération non linéaire dans un corps composite de sous-corps finis ($GF(2^4)^2$ ; $GF((2^2)^2)^2$) dudit corps fini ($GF(2^8)$), chacune desdites tables de correspondance composites (40) étant plus petite qu'une table de correspondance (50) qui peut mettre en œuvre de façon autonome ladite opération non linéaire dans un corps fini ($GF(2^8)$).

9. Appareil selon la revendication 6, la revendication 7 ou la revendication 8, **caractérisé en ce que** lesdites tables de correspondance composites (40) sont mises en œuvre par le biais de structures à bascules bistables, qui sont configurées pour être initialisées par ladite première combinaison logique ($\Delta_1$) dudit premier masque d'entrée ($R_1$) et dudit deuxième masque d'entrée ($R_1$') et ladite deuxième combinaison logique ($\Delta_2$) dudit premier masque de sortie ($R_2$') et dudit deuxième masque de sortie ($R_2$').

10. Appareil selon l'une quelconque des revendications 6 à 9, **caractérisé en ce qu'**il est configuré pour effectuer lesdites opérations d'initialisation en un seul cycle d'horloge.

11. Appareil selon l'une quelconque des revendications 6 à 10, **caractérisé en ce qu'**il est inclus dans un boîtier décodeur et/ou dans une carte à puce.

12. Produit programme d'ordinateur pouvant être chargé dans la mémoire d'au moins un ordinateur, le produit programme d'ordinateur comprenant des portions de code logiciel appropriées pour mettre en œuvre les étapes du procédé selon l'une quelconque des revendications 1 à 5 lorsque le programme est exécuté sur ledit au moins un ordinateur.

Fig. 1a

$dout_{mask} = LUT^0(din_{mask})$

Fig. 1b

$dout'_{mask} = LUT'(din'_{mask})$

Fig. 2a          Fig. 2b

EP 2 928 111 B1

EP 2 928 111 B1

R,T →  [ 310 ]  $R \oplus S, T \oplus U$  →  [ 320 ]  $S \oplus L, U \oplus M$  →  [ 330 ]  →  [ 210 ]

Fig. 3

din[8]

dout [8]

sbox_dout [8]

10

11

12

Fig. 4

EP 2 928 111 B1

Fig. 5

din[8]

22
24
T in
4
4
27
25a
sq 4
mul 4
26
mulK 4
28
31
inv 4
29
mul 4
mul 4
25b
25c
T out
30

dout[8]

Fig. 6

EP 2 928 111 B1

Fig. 7

EP 2 928 111 B1

Fig. 8

Fig. 9a

EP 2 928 111 B1

Fig. 9b

EP 2 928 111 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2011055591 A1, Rivain

### Non-patent literature cited in the description

- **K. SCHRAMM ; C. PAAR.** Higher Order Masking of the AES. *Topics in Cryptology, CT-RSA,* 2006, ISBN 978-3-540-31033-4, 208-225

- **SATOH et al.** *A Compact Rijndael Hardware Architecture with S-Box Optimization,* 245-248, http://class.ece.iastate.edu/tyagi/cpre681/papers/satoh asiacryptt.pdf